# FASCICULE DE BREVET EUROPEEN

(11) **EP 1 768 863 B1**
(45) Date de publication et mention de la délivrance du brevet: **02.01.2013**
(21) Numéro de dépôt: 05761170.9
(22) Date de dépôt: 06.07.2005
(51) Int. Cl.: B60G 21/05

(54) **ELEMENT DE LIAISON RENFORCE ENTRE UN BRAS LONGITUDINAL D'ESSIEU ET UNE BARRE ANTI-DEVERS, ESSIEU, VEHICULE ET PROCEDE DE FABRICATION CORRESPONDANTS**
VERSTÄRKTES VERBINDUNGSELEMENT, DAS ZWISCHEN EINEM LÄNGSACHSENARM UND EINEM STABILISATOR ANGEORDNET IST, UND ENTSPRECHENDE ACHSE, FAHRZEUG UND HERSTELLUNGSVERFAHREN
REINFORCED CONNECTING ELEMENT WHICH IS DISPOSED BETWEEN A LONGITUDINAL AXLE ARM AND AN ANTI-ROLL BAR, AND CORRESPONDING AXLE, VEHICLE AND PRODUCTION METHOD

(30) Priorité: 13.07.2004 FR 0407829
(43) Date de publication de la demande: 04.04.2007
(73) Titulaire: Auto Chassis International SNC, 72086 Le Mans Cédex 9 (FR)
(72) Inventeur: VENEAU, Jean, F-72370 Ardenay Sur Merize (FR); HEURTHAULT, Philippe, F-72560 Change (FR); RICHARD, Laurent, F-72000 Le Mans (FR)
(74) Mandataire: Rougemont, Bernard
(86) Numéro de dépôt international: PCT/EP2005/053230
(87) Numéro de publication internationale: WO 2006/005709

(56) Documents cités:
- FR-A- 2 730 192
- FR-A- 2 761 304
- FR-A- 2 766 422
- FR-A- 2 840 854
- FR-A- 2 846 914

## Description

Le domaine de l'invention est celui des véhicules automobiles. Plus précisément, l'invention concerne les essieux de véhicules automobiles, et en particulier les essieux souples.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Au cours de la conception d'un essieu, deux grandeurs sont, entre autres, considérées pour apprécier la qualité de l'essieu : la flexion et la torsion.

Le principe des essieux souples permet de concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Les sections choisies pour réaliser des traverses en acier (ou autre matériau isotrope) ont souvent des formes de « V », de « U », de « L », car ces types de géométrie présentent un rapport intéressant entre inertie de flexion et inertie de torsion.

Les dernières années ont vu un déploiement important de la technique des essieux souples sur les segments de gamme inférieure et moyenne de la construction automobile, grâce à de nombreux avantages, parmi lesquels un excellent compromis prestations/architecture, et une mise en oeuvre économique utilisant principalement des assemblages de type mécano soudé.

Ces avantages conduisent les concepteurs de liaison au sol à continuellement pousser la technique dans ses derniers retranchements. Les essieux souples sont en effet entachés d'un certain nombre de limitations parmi lesquelles un compromis délicat entre raideurs longitudinale et transversale, et une durabilité conditionnée par la tenue en endurance de chacun de leurs composants, soumis à d'importantes déformations élastiques.

L'élévation permanente des exigences de confort et d'agrément de conduite oriente notamment la conception des essieux souples vers des solutions consistant à introduire une raideur de torsion entre les deux bras tirés, communément appelée « barre anti-devers » ou « BAD », dans le but de limiter le dévers du véhicule en virage tout en préservant une grande souplesse verticale du train, garante du filtrage des imperfections de la chaussée vers la caisse.

Mais l'élargissement permanent du périmètre d'application de la technique des essieux souples vers des véhicules de forte masse (grosse berline, monospace voire véhicule utilitaire) sans pour autant transiger sur la qualité de prestation, tend à rapprocher continuellement les composants les plus sollicités de leurs limites absolues de fonctionnement, que ce soit la résistance statique à des efforts incidentels, ou la tenue en fatigue à un cycle de chargement représentatif de la vie du train.

Or, la BAD fait partie des composants les plus délicats à mettre au point, notamment sur le plan de l'endurance. Outre la tenue du corps de traverse, les zones d'accostage sur les bras, généralement soudées, sont particulièrement sollicitées et requièrent toute l'attention des développeurs sous peine de rupture prématurée de la liaison.

Une solution décrite dans la demande de brevet FR 2 846 914 au nom de la présente Demanderesse a été proposée pour permettre d'optimiser les prestations de la barre anti-dévers tout en conservant un process de fabrication de l'essieu souple associé qui soit à la fois simple et peu coûteux. D'autres documents divulguent un élement de liaison selon la revendication 1, notamment FR 2761304 et FR 2840854.

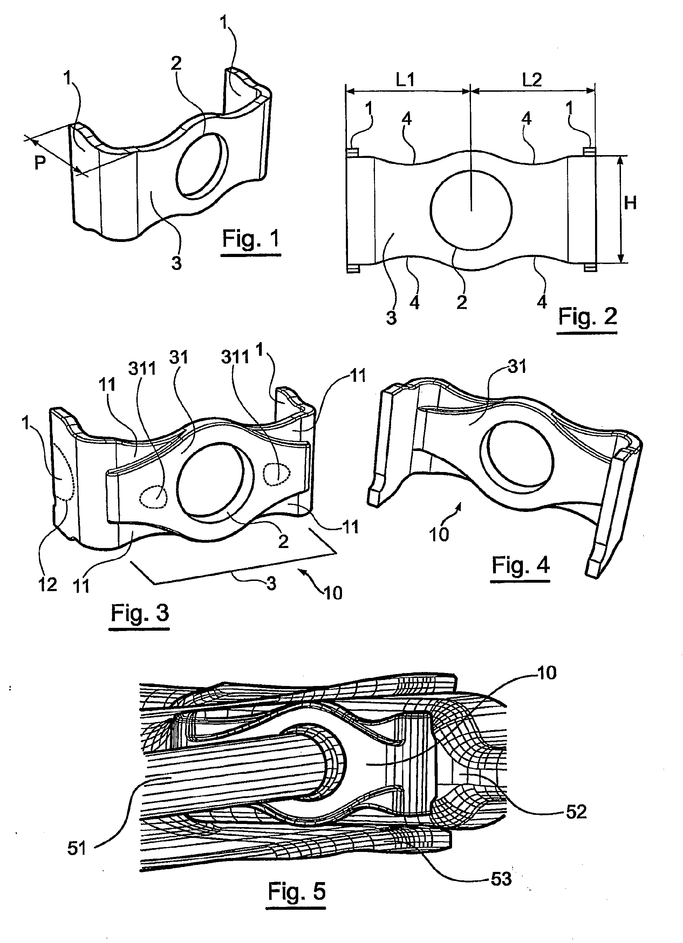

Cette solution illustrée par les figures 1 et 2, consiste en une pièce de liaison destinée à être placée entre un bras longitudinal et l'extrémité d'une BAD.

Tel que représenté, cette pièce présente deux pattes latérales 1 destinées à être soudées et une portion d'accostage 2 de la BAD prévue sur une façade d'accostage 3 reliant les deux pattes latérales 1.

La façade d'accostage présente des échancrures 4 entre la portion d'accostage et les pattes latérales.

Une telle pièce est obtenue par la découpe d'une tôle puis par pliage (par exemple par une technique d'emboutissage) des pattes latérales.

En pratique, cette pièce de liaison est soumise à des contraintes très élevées, notamment en dévers, et plusieurs paramètres doivent être considérés afin d'optimiser la tenue à l'effort de cette pièce.

Ces paramètres sont entre autres, la longueur, la largeur et l'épaisseur de la pièce de liaison, le matériau dans lequel est formée cette pièce, la forme et la trajectoire de cordons de soudure entre cette pièce et le bras, la forme et la position des échancrures.

En particulier, on étudie les dimensions L1 L2, H et P pour optimiser la souplesse vis-à-vis de la flexion de la barre anti-dévers ainsi que la raideur vis-à-vis de la torsion de la barre anti-dévers.

Plus précisément, l'étude d'une telle pièce de liaison a pour but d'obtenir la combinaison d'une bonne souplesse en torsion autour de l'axe longitudinal du véhicule, et une grande raideur en torsion dans la direction transversale, ceci pour limiter considérablement les effets néfastes de la flexion sans affecter la torsion de la BAD, qui est, elle pratiquement intégralement transmise.

Quand l'architecture du véhicule le permet, on prévoit donc les dimensions L1, L2, et H suffisamment grandes pour que l'étendue de la façade d'accostage permette la diffusion des flux d'efforts engendrés par la torsion de la BAD. La tenue du cordon de soudure entre la pièce de liaison et la BAD est ainsi fiabilisée.

Toutefois, dans un environnement confiné, on ne peut plus maîtriser les dimensions L1 L2, H et P de façon satisfaisante pour assurer la résistance de la pièce de liaison et des cordons de soudure qui la solidarisent au bras longitudinal d'une part et à la BAD d'autre part.

Par conséquent, le recours à une pièce de liaison conçue selon l'art antérieur ne peut être maintenu dans les véhicules dont l'architecture entraîne une réduction de l'espace disponible au voisinage de l'essieu correspondant.

L'invention a notamment pour objectif de pallier cet inconvénient de l'art antérieur.

Plus précisément, l'invention a pour objectif de proposer une pièce de liaison qui puisse s'intégrer dans des espaces réduits par rapport à une pièce de liaison selon l'art antérieur, et qui présente une résistance mécanique satisfaisante et durable.

L'invention a également pour objectif de fournir une telle pièce de liaison qui contribue à la maîtrise du poids de l'essieu qui l'intègre.

L'invention a aussi pour objectif de fournir une telle pièce de liaison qui puisse être fabriquée à partir d'une tôle dont l'épaisseur s'inscrit dans une gamme courante.

L'invention a encore pour objectif de fournir une telle pièce de liaison qui soit simple de conception, facile à mettre en oeuvre et qui puisse être fabriquée aisément et de façon peu coûteuse.

Ces objectifs, ainsi que d'autres qui apparaîtront par la suite, sont atteints grâce à l'invention qui a pour objet un élément de liaison entre une barre anti-dévers et un bras longitudinal d'un essieu de véhicule automobile, comprenant une façade d'accostage présentant une portion d'accostage avec ladite barre anti-dévers, ladite façade reliant deux pattes latérales destinées à être solidarisées audit bras longitudinal, caractérisé en ce que chacune desdites pattes présente une première section transversale s'étendant, selon l'épaisseur de ladite première section transversale, essentiellement entre deux plans présentant un premier écartement entre eux, et en ce que ladite façade présente au moins partiellement une deuxième section transversale s'étendant, selon l'épaisseur de ladite deuxième section transversale, entre deux plans, dont l'un dans lequel s'inscrit ladite portion d'accostage, présentant un deuxième écartement entre eux, ledit deuxième écartement étant supérieur audit premier écartement.

De cette façon, on peut réaliser une pièce de liaison qui présente des dimensions L1, L2 et H réduites tout en conservant une bonne aptitude à encaisser le couple de torsion transmis par la barre anti-dévers.

On exploite donc une troisième dimension (celle selon l'axe de la barre anti-dévers) pour constituer des moyens de nature à augmenter la capacité de l'élément à résister au couple de torsion transmis par la barre anti-dévers.

La liaison entre la barre anti-dévers et la pièce de liaison est ainsi préservée de façon durable grâce au renfort apporté par l'épaisseur de matière au voisinage de la zone d'accostage de la barre anti-dévers.

Une telle pièce répond donc de façon satisfaisante à la combinaison des critères liés à la tenue mécanique et à une intégration dans un espace réduit

Selon une première approche de l'invention, ledit élément présente au moins trois zones d'épaisseur différentes, dont au moins deux zones extrêmes s'étendant essentiellement dans les plans desdites pattes et présentant une première épaisseur, et au moins une zone intermédiaire s'étendant au moins au voisinage de ladite portion d'accostage avec ladite barre anti-dévers, et présentant une deuxième épaisseur supérieure à ladite première épaisseur.

La dimension selon l'axe de la barre anti-dévers est donc exploitée pour augmenter localement l'épaisseur de l'élément de liaison. Cette augmentation d'épaisseur se traduit donc par une meilleure tenue mécanique de l'élément de liaison.

Selon une solution préférée de cette première approche, ladite zone intermédiaire se prolonge en direction de chacune desdites pattes avec une hauteur décroissante de ladite portion d'accostage vers lesdites pattes.

Ainsi, la zone renforcée de la pièce permet de diffuser les efforts de torsion occasionnés par la barre anti-dévers, ces efforts étant éloignés de la zone d'accostage et donc du cordon de soudure entre la pièce et la barre anti-dévers.

Avantageusement, ladite zone intermédiaire se limite essentiellement à ladite façade d'accostage.

On peut ainsi limiter la zone plus épaisse au plan d'accostage, et donc maîtriser l'augmentation correspondante du poids de la pièce.

Préférentiellement, chacune desdites zones extrêmes s'étend dans ladite façade d'accostage de part et d'autre d'un desdits prolongements de ladite zone intermédiaire.

Les zones extrêmes contribuent ainsi à la reprise des efforts en torsion transmis par la barre anti-dévers, et aussi à la reprise des efforts entraînés par la flexion de la barre anti-dévers.

Selon une variante envisageable, ladite zone intermédiaire présente au moins un évidement entre ladite portion d'accostage et chacune desdites pattes.

On peut ainsi modifier la direction des flux de diffusion des efforts. Ainsi, en fonction des comportements mécaniques souhaités pour la pièce de liaison, on pourra réaliser, ou pas, cet évidement.

Avantageusement, ladite zone intermédiaire est délimitée par une surépaisseur constituée sur chacune des faces de ladite façade d'accostage.

De cette façon, on peut faire varier sensiblement l'épaisseur de la zone intermédiaire. On note toutefois que la surépaisseur peut n'être prévue que sur une seule face du plan d'accostage dans un autre mode de réalisation envisageable.

Selon un mode de réalisation préférentiel, ladite portion d'accostage comprend un orifice destiné à recevoir ladite barre anti-dévers.

Il est toutefois concevable selon un mode de réalisation envisageable, de prévoir une portion d'accostage pleine (donc sans orifice), la barre anti-dévers étant soudée en bout sur la pièce.

Cependant, l'orifice contribue à obtenir une liaison fiable entre le plan d'accostage de la pièce et la barre anti-dévers. On peut notamment renforcer cette liaison en réalisant un cordon de soudure de part et d'autre de l'élément de liaison pour solidariser celui-ci à la barre anti-dévers.

On note que la surépaisseur mentionnée précédemment est alors localisée au moins autour de cet orifice et qu'elle peut être réalisée de telle sorte qu'elle apparaisse comme une collerette, voire un manchon dans laquelle ou lequel vient s'emmancher la barre anti-dévers.

Dans ce cas, selon une deuxième approche de l'invention ladite portion d'accostage comprend un manchon dans lequel la barre anti-dévers est destinée à s'emmancher.

Le manchon constitue alors une zone susceptible d'absorber et/ou de diffuser efficacement le couple de torsion transmis par la barre anti-dévers.

Avantageusement, l'élément de liaison est réalisé à partir d'au moins une plaque en tôle.

La pièce de liaison peut ainsi être obtenue de façon simple et peu coûteuse, comme cela va apparaître plus clairement par la suite.

Selon une solution avantageuse de la deuxième approche de l'invention, ledit manchon est réalisé par déformation de ladite plaque en tôle.

On peut ainsi obtenir le manchon sans apport de matière, ce qui s'avère particulièrement intéressant en termes de poids de l'élément de liaison.

Selon une variante envisageable, ledit orifice présente préférentiellement en son pourtour au moins une cannelure destinée à coopérer avec une cannelure ménagée à l'extrémité de ladite barre anti-dévers.

De cette façon, on améliore encore le transfert du couple de torsion de la barre anti-dévers à la pièce de liaison.

On note qu'une répartition appropriée de cannelure sur la portion d'accostage et la barre anti-dévers peut permettre d'envisager l'économie du cordon de soudure entre les deux éléments.

Selon un mode de réalisation particulier, l'élément de liaison comprend une première pièce en tôle incluant ladite façade d'accostage et lesdites pattes latérales, et une plaque rapportée sur ladite façade de façon à définir ladite zone intermédiaire.

On note que la zone intermédiaire peut être obtenue par d'autres techniques. Selon d'autres modes de réalisation envisageables, notamment par forgeage de la tôle, ou encore en réalisation la pièce par moulage.

Selon un mode de réalisation particulier, chacune desdites pattes présente un brin d'accostage supérieur et un brin d'accostage inférieur séparés par un évidement.

Ainsi, on introduit une souplesse relative dans les pattes, ce qui permet une meilleure dispersion et/ou absorption des efforts s'exerçant sur la pièce. Ceci contribue à assurer une meilleure tenue des liaisons entre la pièce et le bras longitudinal correspondant.

L'invention concerne également un essieu de véhicule automobile comprenant deux bras longitudinaux reliés par une traverse et par une barre anti-dévers, un élément de liaison étant prévu entre ladite barre anti-dévers et chacun desdits bras longitudinaux, ledit élément de liaison comprenant une façade d'accostage présentant une portion d'accostage avec ladite barre anti-dévers, ladite façade reliant deux pattes latérales destinées à être solidarisées audit bras longitudinal, caractérisé en ce que chacune desdites pattes présente une première section transversale s'étendant, selon l'épaisseur de ladite première section transversale, essentiellement entre deux plans présentant un premier écartement entre eux, et en ce que ladite façade présente au moins partiellement une deuxième section transversale s'étendant, selon l'épaisseur de ladite deuxième section transversale, entre deux plans, dont l'un dans lequel s'inscrit ladite portion d'accostage, présentant un deuxième écartement entre eux, ledit deuxième écartement étant supérieur audit premier écartement

L'invention concerne aussi un véhicule automobile équipé d'au moins un essieu automobile comprenant deux bras longitudinaux reliés par une traverse et par une barre anti-dévers, un élément de liaison étant prévu entre ladite barre anti-dévers et chacun desdits bras longitudinaux, ledit élément de liaison comprenant une façade d'accostage présentant une portion d'accostage avec ladite barre anti-dévers, ladite façade reliant deux pattes latérales destinées à être solidarisées audit bras longitudinal, caractérisé en ce que chacune desdites pattes présente une première section transversale s'étendant, selon l'épaisseur de ladite première section transversale, essentiellement entre deux plans présentant un premier écartement entre eux, et en ce que ladite façade présente au moins partiellement une deuxième section transversale s'étendant, selon l'épaisseur de ladite deuxième section transversale, entre deux plans, dont l'un dans lequel s'inscrit ladite portion d'accostage, présentant un deuxième écartement entre eux, ledit deuxième écartement étant supérieur audit premier écartement.

L'invention concerne encore un procédé de fabrication d'un élément de liaison tel que décrit précédemment.

Selon la première approche de l'invention mentionnée précédemment, le procédé comprend les étapes de :
- découpe d'une première tôle à la forme dudit élément de liaison ;
- obtention de ladite première épaisseur et de ladite deuxième épaisseur ;
- pliage de façon à obtenir lesdites pattes latérales.

Selon un premier mode de réalisation du procédé, ladite étape d'obtention de ladite première épaisseur et de ladite deuxième épaisseur est réalisée par formage à chaud de ladite première tôle.

Selon un deuxième mode de réalisation du procédé, ladite étape d'obtention de ladite première épaisseur et de ladite deuxième épaisseur est réalisée par soudage d'une deuxième tôle sur ladite première tôle.

Selon la deuxième approche de l'invention mentionnée précédemment, le procédé comprend les étapes de :
- découpe d'une première tôle à la forme dudit élément de liaison ;
- découpe dudit orifice ;
- déformation, lors d'une étape d'emboutissage, de ladite façade de façon à former ledit manchon.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont des vues respectivement en perspective et de face d'une pièce de liaison selon l'art antérieur ;
- les figures 3 et 4 sont deux vues en perspective d'une pièce de liaison entre un bras longitudinal d'essieu et une barre anti-dévers selon l'invention ;

- la figure 5 est une vue d'une pièce de liaison selon l'invention, montée sur un essieu souple ;
- la figure 6 est une vue en perspective d'une pièce de liaison selon un autre mode de réalisation de l'invention.

Selon une première approche de l'invention, l'élément de liaison présente différentes épaisseurs, au moins la portion d'accostage étant épaissie par rapport à d'autres zones de la pièce, ceci pour obtenir un compromis entre la résistance de la pièce et son poids, en particulier lorsque celle-ci doit présenter des dimensions réduites pour s'intégrer dans un espace confiné.

Ceci est illustré par les figures 3 à 5 qui font apparaître une pièce de liaison entre une barre anti-dévers 51 et un bras longitudinal 52, cette pièce comprenant une façade d'accostage 3 reliant des pattes latérales 1 destinées à être soudées sur le bras longitudinal.

Selon le présent mode de réalisation de l'invention, la pièce de liaison 10 présente une zone intermédiaire 31 s'étendant au voisinage de la portion d'accostage 2 avec la BAD, cette zone intermédiaire 31 présentant une épaisseur supérieure aux zones extrêmes de la pièce correspondant sensiblement aux pattes latérales 1.

Tel que cela apparaît, la zone intermédiaire 31 s'étend autour de l'orifice délimitant la portion d'accostage, et se prolonge en direction des pattes latérales 1 avec une hauteur décroissante.

Les zones extrêmes de plus faible épaisseur comprennent quant à elles les pattes 1 et un prolongement 11 des pattes 1 dans le plan d'accostage 3 de façon à s'étendre de part et d'autre des prolongements latéraux de la zone intermédiaire 31.

Tel que cela apparaît sur les figures 3 et 4, la zone intermédiaire 31 est constituée par une surépaisseur qui s'inscrit essentiellement dans le plan d'accostage et qui est prévue sur chacune des faces de celui-ci.

Selon des variantes envisageables de la pièce de liaison qui vient d'être décrite, on peut également prévoir :
- des évidements 311 (apparaissant en traits pointillés sur la figure 3) réalisés dans le plan d'accostage 3, de part et d'autre de la portion d'accostage 2 ;
- une échancrure 12 (apparaissant en traits pointillés sur la figure 3) réalisée dans chacune des pattes 1 de façon que celle-ci soit soudée au bras longitudinal correspondant par l'intermédiaire d'un brin supérieur et d'un brin inférieur ;
- une ou plusieurs cannelures (non représentées) ménagées sur le pourtour de l'orifice de la portion d'accostage, cette ou ces cannelures étant destinées à coopérer avec une ou des cannelures correspondantes réalisées à l'extrémité de la BAD.

L'élément de liaison selon l'invention peut donc être intégrée à un essieu souple tel qu'illustré par la figure 5 qui fait apparaître le montage d'un élément de liaison 10 à l'intérieur de la section ouverte d'une traverse 53 d'essieu, l'élément de liaison 10 étant soudé à un bras longitudinal 52 d'une part, et à une BAD 51 d'autre part.

On comprend que, dans ce contexte de montage, l'espace est tel, que les dimensions de l'élément de liaison doivent être relativement réduites.

Un tel élément de liaison peut être fabriqué à partir d'une tôle découpée selon une forme prédéterminée.

La zone intermédiaire 31 peut être obtenue notamment selon les techniques suivantes :
- formage à chaud (forgeage) de la tôle découpée ;
- découpe d'une deuxième tôle à la forme de la zone intermédiaire 31 et soudage de celle-ci sur la première tôle découpée.

Le procédé comprend également une étape de pliage des pattes latérales, cette étape pouvant être effectuée avant ou après l'obtention de la zone intermédiaire, notamment en fonction de la technique utilisée pour obtenir celle-ci.

L'élément de liaison ainsi réalisée est ensuite soudée sur les bras longitudinaux de l'essieu, puis la BAD est soudée sur les pièces de liaison, ou en procédant en inversant l'ordre de ces deux dernières étapes.

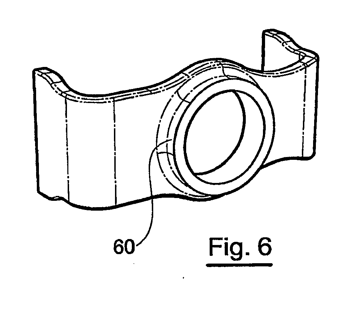

Selon une deuxième approche de l'invention illustrée par la figure 6, l'élément de liaison présente un manchon 60 dans lequel la BAD est destinée à s'emmancher.

Ainsi, on déporte la portion d'accostage dans un plan présentant, avec le plan arrière de la façade, un écartement supérieur à l'épaisseur des pattes latérales.

On note que ce mode de réalisation se prête particulièrement bien au fait de rapporter un cordon de soudure entre l'élément de liaison et la BAD, sur chaque face de la façade d'accostage.

Un tel élément de liaison peut être fabriqué à partir d'une tôle découpée selon une forme prédéterminée dans laquelle un orifice est ménagé, l'élément étant ensuite déformé par emboutissage de façon à former le manchon destiné à recevoir la barre anti-dévers.

## Revendications

1. Elément de liaison entre une barre anti-dévers (51) et un bras longitudinal (52) d'un essieu de véhicule automobile comprenant une façade d'accostage (3) présentant une portion d'accostage (2) avec ladite barre anti-dévers (51), ladite façade (3) reliant deux pattes latérales (1) destinées à être solidarisées audit bras longitudinal (52),
**caractérisé en ce que** chacune desdites pattes (1) présente une première section transversale s'étendant, selon l'épaisseur de ladite première section transversale, essentiellement entre deux plans présentant un premier écartement entre eux, et **en ce que** ladite façade (3) présente au moins partiellement une deuxième section transversale s'étendant, selon l'épaisseur de ladite deuxième section transversale, entre deux plans, dont l'un dans lequel s'inscrit ladite portion d'accostage (2), présentant un deuxième écartement entre eux, ledit deuxième écartement étant supérieur audit premier écartement.

2. Elément de liaison selon la revendication 1, **caractérisé en ce qu'**il présente au moins trois zones d'épaisseur différentes, dont au moins deux zones extrêmes s'étendant essentiellement dans les plans desdites pattes (1) et présentant une première épaisseur, et au moins une zone intermédiaire (31) s'étendant au moins au voisinage de ladite portion d'accostage (2) avec ladite barre anti-dévers (51), et présentant une deuxième épaisseur supérieure à ladite première épaisseur.

3. Elément de liaison selon la revendication 2, **caractérisé en ce que** ladite zone intermédiaire (31) se prolonge en direction de chacune desdites pattes (1) avec une hauteur décroissante de ladite portion d'accostage (2) vers lesdites pattes (1).

4. Elément de liaison selon l'une des revendications 2 et 3, **caractérisé en ce que** ladite zone intermédiaire (31) se limite essentiellement à ladite façade d'accostage (3).

5. Elément de liaison selon l'une des revendications 3 et 4, **caractérisé en ce que** chacune desdites zones extrêmes s'étend dans ladite façade d'accostage (3) de part et d'autre d'un desdits prolongements de ladite zone intermédiaire.

6. Elément de liaison selon l'une quelconque des revendications 2 à 5, **caractérisé en ce que** ladite zone intermédiaire (31) présente au moins un évidement (311) entre ladite portion d'accostage (2) et chacune desdites pattes (1).

7. Elément de liaison selon l'une quelconque des revendications 2 à 6, **caractérisé en ce que** ladite zone intermédiaire (31) est délimitée par une surépaisseur constituée sur chacune des faces de ladite façade d'accostage (3).

8. Elément de liaison selon l'une quelconque des revendications 1 à 7, **caractérisé en ce que** ladite portion d'accostage (2) comprend un orifice destiné à recevoir ladite barre anti-dévers (51).

9. Elément de liaison selon les revendications 1 et 8, **caractérisé en ce que** ladite portion d'accostage (2) comprend un manchon dans lequel la barre anti-dévers (51) est destinée à s'emmancher.

10. Elément de liaison selon l'une quelconque des revendications 1 à 9, **caractérisé en ce qu'**il est réalisé à partir d'au moins une plaque en tôle.

11. Elément de liaison selon les revendications 9 et 10, **caractérisé en ce que** ledit manchon est réalisé par déformation de ladite plaque en tôle.

12. Elément de liaison selon l'une quelconque des revendications 8 à 11, **caractérisé en ce que** ledit orifice présente en son pourtour au moins une cannelure destinée à coopérer avec une cannelure ménagée à l'extrémité de ladite barre anti-dévers (51).

13. Elément de liaison selon les revendications 2 et 10, **caractérisé en ce qu'**il comprend une première pièce en tôle incluant ladite façade d'accostage (3) et lesdites pattes latérales (1), et une plaque rapportée sur ladite façade (3) de façon à définir ladite zone intermédiaire.

14. Elément de liaison selon l'une quelconque des revendications 1 à 13, **caractérisé en ce que** chacune desdites pattes (1) présente un brin d'accostage supérieur et un brin d'accostage inférieur séparés par un évidement (12).

15. Essieu de véhicule automobile comprenant deux bras longitudinaux (52) reliés par une traverse (53) et par une barre anti-dévers (51), un élément de liaison (10) étant prévu entre ladite barre anti-dévers (51) et chacun desdits bras longitudinaux (52), ledit élément de liaison comprenant une façade d'accostage (3) présentant une portion d'accostage (2) avec ladite barre anti-dévers (51), ladite façade (3) reliant deux pattes latérales (1) destinées à être solidarisées audit bras longitudinal (52),
**caractérisé en ce que** chacune desdites pattes (1) présente une première section transversale s'étendant, selon l'épaisseur de ladite première section transversale, essentiellement entre deux plans présentant un premier écartement entre eux, et **en ce que** ladite façade (3) présente au moins partiellement une deuxième section transversale s'étendant, selon l'épaisseur de ladite deuxième section transversale, entre deux plans, dont l'un dans lequel s'inscrit ladite portion d'accostage (2), présentant un deuxième écartement entre eux, ledit deuxième écartement étant supérieur audit premier écartement.

16. Véhicule automobile équipé d'au moins un essieu automobile comprenant deux bras longitudinaux (52) reliés par une traverse (53) et par une barre anti-dévers (51), un élément de liaison (10) étant prévu entre ladite barre anti-dévers (51) et chacun desdits bras longitudinaux (52), ledit élément de liaison comprenant une façade d'accostage (3) présentant une portion d'accostage (2) avec ladite barre anti-dévers (51), ladite façade (3) reliant deux pattes latérales (1) destinées à être solidarisées audit bras longitudinal (52),
**caractérisé en ce que** chacune desdites pattes (1) présente une première section transversale s'étendant, selon l'épaisseur de ladite première section transversale, essentiellement entre deux plans présentant un premier écartement entre eux, et **en ce que** ladite façade (3) présente au moins partiellement une deuxième section transversale s'étendant, selon l'épaisseur de ladite deuxième section transversale, entre deux plans, dont l'un dans lequel s'inscrit ladite portion d'accostage (2), présentant un deuxième écartement entre eux, ledit deuxième écartement étant supérieur audit premier écartement.

17. Procédé de fabrication d'un élément de liaison selon l'une quelconque des revendications 2 à 14, **caractérisé en ce qu'**il comprend les étapes de :
- découpe d'une première tôle à la forme dudit élément de liaison (10) ;
- obtention de ladite première épaisseur et de ladite deuxième épaisseur ;
- pliage de façon à obtenir lesdites pattes latérales (1).

18. Procédé de fabrication d'un élément de liaison selon la revendication 17, **caractérisé en ce que** ladite étape d'obtention de ladite première épaisseur et de ladite deuxième épaisseur est réalisée par formage à chaud de ladite première tôle.

19. Procédé de fabrication d'un élément de liaison selon la revendication 17, **caractérisé en ce que** ladite étape d'obtention de ladite première épaisseur et de ladite deuxième épaisseur est réalisée par soudage d'une deuxième tôle sur ladite première tôle.

20. Procédé de fabrication d'un élément de liaison selon l'une quelconque des revendications 8 à 14, **caractérisé en ce qu'**il comprend les étapes de :
- découpe d'une première tôle à la forme dudit élément de liaison (10) ;
- découpe dudit orifice ;
- déformation, lors d'une étape d'emboutissage, de ladite façade (3) de façon à former ledit manchon.

## Claims

1. Connecting element disposed between an antiroll bar (51) and a longitudinal arm (52) of a motor vehicle axle, comprising a coupling surface (3) having a segment (2) for coupling with said antiroll bar (51), said surface (3) connecting two lateral lugs (1) which are intended to be solidly connected to said longitudinal arm (52), **characterized in that** each of said lugs (1) has a first transverse section which, depending on the thickness of said first transverse section, extends essentially between two planes having a first spacing between them, and **in that** said surface (3) has at least partially a second transverse section which, depending on the thickness of said second transverse section, extends between two planes, one of which contains said coupling segment (2), having a second spacing between them, said second spacing being greater than said first spacing.

2. Connecting element according to Claim 1, **characterized in that** it has at least three different thickness zones, of which at least two end zones extend essentially into the planes of said lugs (1) and have a first thickness, and at least one intermediate zone (31) extends at least to the vicinity of said segment (2) for coupling with said antiroll bar (51), and has a second thickness greater than said first thickness.

3. Connecting element according to Claim 2, **characterized in that** said intermediate zone (31) continues in the direction of each of said lugs (1) with the height of said coupling segment (2) decreasing toward said lugs (1).

4. Connecting element according to either of Claims 2 and 3, **characterized in that** said intermediate zone (31) is limited essentially to said coupling surface (3).

5. Connecting element according to either of Claims 3 and 4, **characterized in that** each of said end zones extends into said coupling surface (3) on either side of one of said continuations of said intermediate zone.

6. Connecting element according to any one of Claims 2 to 5, **characterized in that** said intermediate zone (31) has at least one cutout (311) between said coupling segment (2) and each of said lugs (1).

7. Connecting element according to any one of Claims 2 to 6, **characterized in that** said intermediate zone (31) is defined by an added thickness constituted on each of the faces of said coupling surface (3).

8. Connecting element according to any one of Claims 1 to 7, **characterized in that** said coupling segment (2) comprises an orifice which is intended to receive said antiroll bar (51).

9. Connecting element according to Claims 1 and 8, **characterized in that** said coupling segment (2) comprises a sleeve into which the antiroll bar (51) is intended to be inserted.

10. Connecting element according to any one of Claims 1 to 9, **characterized in that** it is made from at least one sheet metal plate.

11. Connecting element according to Claims 9 and 10, **characterized in that** said sleeve is made by deformation of said sheet metal plate.

12. Connecting element according to any one of Claims 8 to 11, **characterized in that** said orifice has on its circumference at least one spline which is intended to cooperate with a groove made at the end of said antiroll bar (51).

13. Connecting element according to Claims 2 and 10, **characterized in that** it comprises a first piece made of sheet metal including said coupling surface (3) and said lateral lugs (1), and a plate attached to said surface (3) so as to define said intermediate zone.

14. Connecting element according to any one of Claims 1 to 13, **characterized in that** each of said lugs (1) has an upper coupling tip and a lower coupling tip separated by a cutout (12).

15. Motor vehicle axle comprising two longitudinal arms (52) connected by a crossmember (53) and an antiroll bar (51), a connecting element (10) being provided between said antiroll bar (51) and each of said longitudinal arms (52), said connecting element comprising a coupling surface (3) having a segment (2) for coupling with said antiroll bar (51), said surface (3) connecting two lateral lugs (1) which are intended to be solidly connected to said longitudinal arm (52), **characterized in that** each of said lugs (1) has a first transverse section which, depending on the thickness of said first transverse section, extends essentially between two planes having a first spacing between them, and **in that** said surface (3) has at least partially a second transverse section which, depending on the thickness of said second transverse section, extends between two planes, one of which contains said coupling segment (2), having a second spacing between them, said second spacing being greater than said first spacing.

16. Motor vehicle equipped with at least one automobile axle comprising two longitudinal arms (52) connected by a crossmember (53) and an antiroll bar (51), a connecting element (10) being provided between said antiroll bar (51) and each of said longitudinal arms (52), said connecting element comprising a coupling surface (3) having a segment (2) for coupling with said antiroll bar (51), said surface (3) connecting two lateral lugs (1) which are intended to be solidly connected to said longitudinal arm (52), **characterized in that** each of said lugs (1) has a first transverse section which, depending on the thickness of said first transverse section, extends essentially between two planes having a first spacing between them, and **in that** said surface (3) has at least partially a second transverse section which, depending on the thickness of said second transverse section, extends between two planes, one of which contains said coupling segment (2), having a second spacing between them, said second spacing being greater than said first spacing.

17. Production method for a connecting element according to any one of Claims 2 to 14, **characterized in that** it comprises the following steps:
- cutting a first metal sheet to the shape of the said connecting element (10);
- obtaining said first thickness and said second thickness; and
- bending so as to obtain said lateral lugs (1) .

18. Production method for a connecting element according to Claim 17, **characterized in that** said step for obtaining said first thickness and said second thickness is carried out by hot forming of said first metal sheet.

19. Production method for a connecting element according to Claim 17, **characterized in that** said step for obtaining said first thickness and said second thickness is carried out by welding a second metal sheet to said first metal sheet.

20. Production method for a connecting element according to any one of Claims 8 to 14, **characterized in that** it comprises the following steps:
- cutting a first metal sheet to the shape of said connecting element (10);
- cutting said orifice; and
- deforming, during a pressing step, said surface (3) so as to form said sleeve.

## Patentansprüche

1. Verbindungselement zwischen einem Stabilisator (51) und einem Längsarm (52) einer Kraftfahrzeugachse, das eine Andockfassade (3) aufweist, die einen Andockteil (2) mit dem Stabilisator (51) aufweist, wobei die Fassade (3) zwei seitliche Pratzen (1) verbindet, die dazu bestimmt sind, fest mit dem Längsarm (52) verbunden zu werden,
**dadurch gekennzeichnet, dass** jede der Pratzen (1) einen ersten Querschnitt aufweist, der sich entlang der Stärke des ersten Querschnitts im Wesentlichen zwischen zwei Ebenen erstreckt, die einen ersten Abstand untereinander aufweisen, und dass die Fassade (3) mindestens teilweise einen zweiten Querschnitt aufweist, der sich entlang der Stärke des zweiten Querschnitts, zwischen zwei Ebenen erstreckt, wobei der Andockteil (2) in eine dieser Ebenen fällt, die einen zweiten Abstand untereinander aufweisen, wobei der zweite Abstand größer ist als der erste Abstand.

2. Verbindungselement nach Anspruch 1, **dadurch gekennzeichnet, dass** es mindestens drei Zonen mit unterschiedlicher Stärke aufweist, von welchen sich mindestens zwei Endzonen im Wesentlichen in den Ebenen der Pratzen (1) erstrecken und eine erste Stärke aufweisen, und mindestens eine Zwischenzone (31), die sich mindestens in der Nähe des Andockteils (2) mit dem Stabilisator (51) erstreckt und eine zweite Stärke aufweist, die größer ist als die erste Stärke.

3. Verbindungselement nach Anspruch 2, **dadurch gekennzeichnet, dass** sich die Zwischenzone (31) in Richtung jeder der Pratzen (1) mit einer sinkenden Höhe des Andockteils (2) zu den Pratzen (1) verlängert.

4. Verbindungselement nach einem der Ansprüche 2 und 3, **dadurch gekennzeichnet, dass** sich die Zwischenzone (31) im Wesentlichen auf die Andockfassade (3) beschränkt.

5. Verbindungselement nach einem der Ansprüche 3 und 4, **dadurch gekennzeichnet, dass** sich jede der Endzonen in der Andockfassade (3) zu beiden Seiten einer der Verlängerungen der Zwischenzone erstreckt.

6. Verbindungselement nach einem der Ansprüche 2 bis 5, **dadurch gekennzeichnet, dass** die Zwischenzone (31) mindestens eine Aussparung (311) zwischen dem Andockteil (2) und jeder der Pratzen (1) aufweist.

7. Verbindungselement nach einem der Ansprüche 2 bis 6, **dadurch gekennzeichnet, dass** die Zwischenzone (31) von einer Überdicke, die auf jeder der Seiten der Andockfassade (3) gebildet ist, begrenzt ist.

8. Verbindungselement nach einem der Ansprüche 1 bis 7, **dadurch gekennzeichnet, dass** der Andockteil (2) eine Öffnung aufweist, die dazu bestimmt ist, den Stabilisator (51) aufzunehmen.

9. Verbindungselement nach den Ansprüchen 1 und 8, **dadurch gekennzeichnet, dass** der Andockteil (2) eine Hülse aufweist, in die sich der Stabilisator (51) einschieben soll.

10. Verbindungselement nach einem der Ansprüche 1 bis 9, **dadurch gekennzeichnet, dass** es ausgehend von mindestens einer Blechplatte hergestellt wird.

11. Verbindungselement nach den Ansprüchen 9 und 10, **dadurch gekennzeichnet, dass** die Hülse durch Verformung der Blechplatte hergestellt wird.

12. Verbindungselement nach einem der Ansprüche 8 bis 11, **dadurch gekennzeichnet, dass** die Öffnung an ihrem Umfang mindestens eine Nut aufweist, die dazu bestimmt ist, mit einer Nut zusammenzuarbeiten, die an dem Ende des Stabilisators (51) eingerichtet ist.

13. Verbindungselement nach den Ansprüchen 2 und 10, **dadurch gekennzeichnet, dass** es einen ersten Blechteil aufweist, der die Andockfassade (3) und die seitlichen Pratzen (1) enthält, und eine Platte, die derart an die Fassade (3) angebaut ist, dass die Zwischenzone definiert wird.

14. Verbindungselement nach einem der Ansprüche 1 bis 13, **dadurch gekennzeichnet, dass** jede der Pratzen (1) einen oberen Andockschenkel und einen unteren Andockschenkel, die durch eine Aussparung (12) getrennt sind, aufweist.

15. Kraftfahrzeugachse, die zwei Längsarme (52) aufweist, die durch einen Querträger (53) und durch einen Stabilisator (51) verbunden sind, wobei ein Verbindungselement (10) zwischen dem Stabilisator (51) und jedem der Längsarme (52) vorgesehen ist, wobei das Verbindungselement eine Andockfassade (3) aufweist, die einen Andockteil (2) mit dem Stabilisator (51) aufweist, wobei die Fassade (3) zwei seitliche Pratzen (1), die dazu bestimmt sind, fest mit dem Längsarm (52) verbunden zu werden, verbindet,
**dadurch gekennzeichnet, dass** jede der Pratzen (1) einen ersten Querschnitt aufweist, der sich entlang der Stärke des ersten Querschnitts im Wesentlichen zwischen zwei Ebenen erstreckt, die untereinander einen ersten Abstand aufweisen, und dass die Fassade (3) mindestens teilweise einen zweiten Querschnitt aufweist, der sich entlang der Stärke des zweiten Querschnitts zwischen zwei Ebenen erstreckt, wobei der Andockteil (2) in eine dieser Ebenen fällt, die einen zweiten Abstand untereinander aufweisen, wobei der zweite Abstand größer ist als der erste Abstand.

16. Kraftfahrzeug, das mit mindestens einer Kraftfahrzeugachse ausgerüstet ist, die zwei Längsarme (52) aufweist, die durch einen Querträger (53) und durch einen Stabilisator (51) verbunden sind, wobei ein Verbindungselement (10) zwischen dem Stabilisator (51) und jedem der Längsarme (52) vorgesehen ist, wobei das Verbindungselement eine Andockfassade (3) aufweist, die einen Andockteil (2) mit dem Stabilisator (51) aufweist, wobei die Fassade (3) zwei seitliche Pratzen (1) verbindet, die dazu bestimmt sind, fest mit dem Längsarm (52) verbunden zu werden,
**dadurch gekennzeichnet, dass** jede der Pratzen (1) einen ersten Querschnitt aufweist, der sich entlang der Stärke des ersten Querschnitts im Wesentlichen zwischen zwei Ebenen erstreckt, die untereinander einen ersten Abstand aufweisen, und dass die Fassade (3) mindestens teilweise einen zweiten Querschnitt aufweist, der sich entlang der Stärke des zweiten Querschnitts zwischen zwei Ebenen erstreckt, darunter eine, in die der Andockteil (2) fällt, die einen zweiten Abstand untereinander aufweisen, wobei der zweite Abstand größer ist als der erste Abstand.

17. Verfahren zum Herstellen eines Verbindungselements nach einem der Ansprüche 2 bis 14, **dadurch gekennzeichnet, dass** es die folgenden Schritte aufweist:
- Zuschneiden eines ersten Blechs auf die Form des Verbindungselements (10),
- Erzielen der ersten Stärke und der zweiten Stärke,
- Falten, so dass die seitlichen Pratzen (1) erzielt werden.

18. Verfahren zum Herstellen eines Verbindungselements nach Anspruch 17, **dadurch gekennzeichnet, dass** der Schritt des Erzielens der ersten Stärke und der zweiten Stärke durch Warmformen des ersten Blechs ausgeführt wird.

19. Verfahren zum Herstellen eines Verbindungselements nach Anspruch 17, **dadurch gekennzeichnet, dass** der Schritt des Erzielens der ersten Stärke und der zweiten Stärke durch Schweißen eines zweiten Blechs auf das erste Blech ausgeführt wird.

20. Verfahren zum Herstellen eines Verbindungselements nach einem der Ansprüche 8 bis 14, **dadurch gekennzeichnet, dass** es die folgenden Schritte aufweist:
- Zuschneiden eines ersten Blechs auf die Form des Verbindungselements (10),
- Ausschneiden der Öffnung,
- Verformen der Fassade (3) bei einem Pressschritt, so dass die Hülse gebildet wird.
